# FASCICULE DE BREVET EUROPEEN

(11) **EP 2 294 326 B1**
(45) Date de publication et mention de la délivrance du brevet: **08.03.2017**
(21) Numéro de dépôt: 08874696.1
(22) Date de dépôt: 20.06.2008
(51) Int. Cl.: F16D 3/06

(54) **DISPOSITIF D'ACCOUPLEMENT À BILLES À MAINTIEN ARTICULÉ DE DEUX ARBRES COULISSANTS**
KUGELKUPPLUNGSVORRICHTUNG MIT GELENKVERBINDUNG FÜR ZWEI SCHIEBEWELLEN
BALL COUPLING DEVICE WITH HINGED CONNECTION FOR TWO SLIDING SHAFTS

(43) Date de publication de la demande: 16.03.2011
(73) Titulaire: Robert Bosch Automotive Steering Vendôme, 41100 Vendome (FR)
(72) Inventeur: BAHR, Christophe, Bairro Serra CEP 30220-060 Belo Horizonte - MG- (BR); JANVIER, Arnaud, F-41370 Saint Leonard en Beauce (FR)
(74) Mandataire: Alatis
(86) Numéro de dépôt international: PCT/FR2008/000874
(87) Numéro de publication internationale: WO 2009/153417

(56) Documents cités:
- EP-A- 1 065 397
- EP-A- 1 635 081
- FR-A- 2 795 786

## Description

L'invention se rapporte à un dispositif d'accouplement en rotation de deux arbres coulissants suivant leur axe commun. Le dispositif d'accouplement de l'invention s'applique notamment à une colonne de direction de véhicule automobile, en l'adoptant à la partie intermédiaire de colonne reliée au boîtier de direction, ou à la partie haute de colonne reliée au volant de direction.

Dans le cas plus particulier de l'axe intermédiaire, celui-ci a un cardan à chaque extrémité : un cardan est relié à l'entrée de mouvement du boîtier de direction, et l'autre cardan est relié au haut de colonne. Pour avoir une direction correcte des véhicules automobiles actuels, il est nécessaire que la longueur de l'axe intermédiaire soit variable et s'adapte aux oscillations du train avant du véhicule, qui sont dues au profil et à l'état de surface du revêtement de la route. Cette caractéristique est également demandée pour faciliter l'assemblage sur le pignon de crémaillère, et pour absorber les déplacements lors d'un choc frontal du véhicule.

L'axe intermédiaire doit donc avoir tout d'abord une longueur variable, c'est-à-dire qu'il doit présenter une fonction coulissement de deux arbres l'un par rapport à l'autre suivant leur axe commun, qui est l'axe de la partie intermédiaire. De plus, il faut une fonction transmission du mouvement de rotation entre les deux arbres, et du couple de rotation nécessaire à la manoeuvre de la direction.

Il existe de nombreux dispositifs d'accouplement d'arbre coulissants, qui permettent d'associer le passage du couple de rotation entre les deux arbres par l'utilisation de cannelures, qui sont aménagées sur chacun des deux arbres avec des profils conjugués. Cependant ce type de dispositif présente un jeu franc après un cycle d'endurance équivalent à la durée de vie d'un véhicule, qui est celui demandé sur les voitures actuelles. Afin de retarder l'apparition de ce jeu franc, l'ajustement du coulissement des deux arbres lors de la fabrication est relativement serré, ce qui demande lors du montage en chaîne, un effort axial relativement important, d'où un temps de montage plus important et plus de pénibilité dans la réalisation de ce montage.

Cet ajustement doit être précis pour permettre l'absorption correcte des mouvements axiaux en fonctionnement. Or lors du passage de couple de rotation, l'effort axial est fonction du couple à transmettre, il y a alors une augmentation de l'effort de coulissement lié au couple à transmettre et au coefficient de frottement, puis un déblocage axial brutal, d'où l'apparition d'à-coups préjudiciables au maintien d'un bon ajustement du coulissement avec un jeu réduit ; et néfaste à une bonne impression de conduite.

Il existe aussi des dispositifs d'accouplement qui utilisent l'injection plastique sur des parties cannelées appartenant à un arbre mâle métallique et un tube femelle métallique. Cette solution pose des problèmes pour absorber des mouvements axiaux sous des couples importants ; les efforts de coulissement augmentent proportionnellement aux forces de frottement entre les deux parties. Par ailleurs l'usure de l'injection plastique laisse apparaître des jeux. Une dernière solution existe en introduisant des éléments de roulements et des ressorts de contraintes entre l'arbre et le tube. Cette solution satisfaisante pour le coulissement sous souple pose des problèmes en terme de rigidité angulaire car elle est directement proportionnelle à la raideur et à la précontrainte des ressorts.

Dans le document EP1635081 est décrit un dispositif d'accouplement d'arbres coulissants selon le préambule de la revendication 1.

Le but de la présente invention est de proposer un dispositif d'accouplement d'arbres coulissants qui évite les inconvénients précédents, c'est-à-dire un dispositif qui demande un effort axial qui ne soit pas lié au couple à transmettre. Il faut donc que l'effort axial augmente très peu lorsque le couple de rotation à transmettre augmente tout en ayant une forte rigidité angulaire de la transmission. De plus, il faut qu'il n'y ait pas d'apparition de jeu franc après le cycle d'endurance, et que le dispositif d'accouplement des deux arbres puisse se monter facilement dans les encombrements possibles existants sur les véhicules automobiles, et ceci avec un effort axial réduit de mise en place.

Plus précisément le but de l'invention est :
- de diminuer les pressions de contact dues au couple transmis, afin d'améliorer la durée de vie du produit et de conserver les caractéristiques initiales
- de faciliter l'assemblage et d'absorber les tolérances dimensionnelles et géométriques des différents composants ;
- de ne pas trop solliciter l'élément élastique ;
- pour minimiser la variation d'effort de coulissement et améliorer les caractéristiques d'une demande précédente au nom de la demanderesse NACAM.

L'invention se rapporte à un dispositif d'accouplement de deux arbres : un arbre intérieur et un arbre extérieur qui coulissent l'un dans l'autre suivant la direction de leur axe commun. Ledit dispositif d'accouplement des deux arbres comporte des billes, qui sont disposées entre l'arbre intérieur et l'arbre extérieur.

Dans le dispositif d'accouplement, chacune desdites billes est disposée d'une part dans une partie concave de l'arbre intérieur, et d'autre part dans une partie concave de l'arbre extérieur.

Chacune desdites billes se déplace sur deux chemins de roulement disposés de part et d'autre d'un plan médian passant par l'axe commun et par le centre desdites billes. Chacun des deux chemins de roulement coopère avec la partie concave de l'un des deux arbres, qui sont tous parallèles à l'axe commun. Chacun des deux chemins de roulement est poussé par un élément élastique prenant appui dans ladite partie concave, chacune desdites billes se déplaçant directement contre la partie concave de l'autre arbre.

Chacun des deux chemins de roulement a une portion d'appui avec une face d'appui de chacune desdites billes, et une portion pivot avec une face pivot arrondie s'appliquant contre une face support arrondie de la partie concave correspondante de l'arbre. Selon une caractéristique essentielle de l'invention,le rayon de la face support de l'arbre est différent du rayon de la face pivot du chemin de roulement, afin d'avoir deux zones de contact qui déterminent la position d'un axe d'articulation du pivot parallèle à l'axe commun.

Le montage est réalisé de manière qu'au repos, lorsqu'il n'y a pas de transmission de couple, et qu'en action, lorsqu'il y a transmission de couple, chacune desdites billes soit toujours en contact de chaque côté du plan médian, par une zone d'appui avec le chemin de roulement correspondant disposé dans l'un des deux arbres, et par une zone d'appui avec la partie concave de l'autre arbre.

Selon l'invention, la face pivot est convexe et la face support arrondie est concave, l'axe d'articulation du pivot étant situé entre la face pivot et la face d'appui, plus proche de la face pivot que de la face d'appui.

Selon certaines réalisations de l'invention, le rayon de la face support concave de l'arbre est plus petit que le rayon de la face pivot convexe du chemin de roulement. Dans toutes ces réalisations et pour chacun des deux chemins de roulement, les rayons de la face support de l'arbre et de la face pivot du chemin de roulement peuvent être constants ou évolutifs. De plus, la portion d'appui a une face d'appui des billes, qui peut être plane, convexe, concave ou à double concavité.

Afin d'augmenter la sécurité de fonctionnement du dispositif d'accouplement de l'invention, des rainures mâles et des rainures femelles, ayant des profils conjugués avec un certain jeu, sont aménagés sur l'arbre intérieur et sur l'arbre extérieur, de façon qu'en cas de perte des billes, le couple puisse être encore transmis entre l'arbre intérieur et l'arbre extérieur.

Plusieurs structures du dispositif d'accouplement peuvent être élaborées. Dans une structure, le ou les éléments élastiques est/sont disposés dans l'arbre intérieur. Dans une autre structure, le ou les éléments élastiques est/sont disposés dans l'arbre extérieur.

Dans une autre structure, les éléments élastiques sont disposés pour certains dans l'arbre intérieur, et pour les autres dans l'arbre extérieur.

Dans un agencement particulier de l'invention, le dispositif d'accouplement a les billes qui sont disposées en plusieurs rangées axiales.

Pour chaque rangée de billes, il est aménagé dans l'arbre extérieur une partie concave en forme de rainure axiale, dont la section comporte deux faces concaves inclinées l'une par rapport à l'autre, qui viennent en contact avec les billes.

Pour chaque rangée de billes, il est aménagé dans l'arbre intérieur une partie concave en forme de rainure axiale dont la section comporte un fond et deux flancs, le fond étant sensiblement perpendiculaire au plan médian passant par l'axe commun et par l'axe des centres des billes de ladite rangée.

Pour chaque rangée de billes, deux chemins de roulement sont disposés de part et d'autre du plan médian et coopèrent avec la partie concave en forme de rainure axiale de l'arbre intérieur. Chaque chemin de roulement est en forme de barre axiale, dont la section a une portion d'appui et une portion pivot. La portion d'appui a une face d'appui déterminée pour venir en contact avec les billes. La portion pivot est de forme arrondie avec une face pivot convexe, qui coopère avec une face support arrondie concave, faisant la jonction entre le fond et le flanc correspondant de la rainure axiale ; afin d'avoir deux zones de contact déterminant la position de l'axe d'articulation du pivot parallèle à l'axe commun. Chacun des deux chemins de roulement est poussé par un ressort qui prend appui sur le fond de la rainure axiale.

Dans un autre agencement particulier de l'invention, le dispositif d'accouplement a les billes qui sont disposées en plusieurs rangées axiales.

Pour chaque rangée de billes, il est aménagé dans l'arbre intérieur une partie concave en forme de rainure axiale, dont la section comporte deux faces concaves inclinées l'une par rapport à l'autre, qui viennent en contact avec les billes.

Pour chaque rangée de billes, il est aménagé dans l'arbre extérieur une partie concave en forme de rainure axiale dont la section comporte un fond et deux flancs, le fond étant sensiblement perpendiculaire au plan médian passant par l'axe commun et par l'axe des centres des billes de ladite rangée.

Pour chaque rangée de billes, deux chemins de roulement sont disposés de part et d'autre du plan médian et coopèrent avec la partie concave en forme de rainure axiale de l'arbre extérieur. Chaque chemin de roulement est en forme de barre axiale, dont la section a une portion d'appui et une portion pivot.
La portion d'appui a une face d'appui déterminée pour venir en contact avec les billes. La portion pivot est de forme arrondie avec une face pivot convexe, qui coopère avec une face support arrondie concave faisant la jonction entre le fond et le flanc correspondant de la rainure axiale, afin d'avoir deux zones de contact déterminant la position de l'axe d'articulation du pivot parallèle à l'axe commun.Chacun des deux chemins de roulement est poussé par un ressort qui prend appui sur le fond de la rainure axiale.

Selon les différentes réalisations de l'invention, chacun des deux chemins de roulement est poussé par un élément élastique qui est un ressort prenant appui sur le fond de la rainure axiale.

Le ressort est constitué d'un corps muni d'éléments élastiques, et comportant une bordure axiale de chaque côté et une agrafe à chaque extrémité axiale ; ledit corps se montant dans un fond de la partie concave correspondante de l'arbre en ayant une forme conjuguée avec ledit fond c'est-à-dire bombée ou convexe, ayant à chaque extrémité transversale une forme concave recevant la bordure axiale correspondante dudit ressort, dont les deux agrafes s'accrochent sur l'arbre correspondant. Les éléments élastiques sont des languettes transversales agencées directement par découpe dans le corps, lesdites languettes étant accrochées alternativement sur une bordure axiale puis sur l'autre bordure.

Dans un montage particulièrement bien équilibré du dispositif d'accouplement, les billes sont disposées en trois rangées axiales. Les rangées axiales sont transversalement à 120° les unes des autres. L'arbre intérieur est muni de trois rainures axiales, les rainures axiales étant transversalement à 120° les unes des autres. L'arbre extérieur est muni de trois rainures axiales, les rainures axiales étant transversalement à 120° les unes des autres.

Dans un autre montage particulièrement bien équilibré du dispositif d'accouplement, les billes sont disposées en deux rangées axiales diamétralement opposées. L'arbre intérieur est muni de deux rainures axiales diamétralement opposées. L'arbre extérieur est muni de deux rainures axiales diamétralement opposées.

Dans une architecture complète du dispositif d'accouplement selon l'invention, l'arbre intérieur est muni de trois rainures axiales, les rainures axiales étant transversalement à 120° les unes des autres. Dans chaque rainure axiale sont montés un élément élastique et deux chemins de roulement en forme de barre axiale.

Les billes sont disposées en trois rangées axiales, les rangées axiales étant transversalement à 120° les unes des autres.

L'ensemble du manchon à billes avec les chemins de roulement et les boudins axiaux élastiques est fermé à chaque extrémité axiale par un épaulement et par une bague de maintien. La bague de maintien vient s'engager dans chacune des rainures axiales de l'arbre intérieur.

L'arbre extérieur est muni de trois rainures axiales transversalement à 120° les unes des autres, qui viennent coulisser sur les rangées de billes. Les rainures axiales ont la longueur voulue pour permettre le coulissement axial demandé de l'arbre extérieur et de l'arbre intérieur.

Le dispositif d'accouplement selon l'invention s'applique très bien soit à la partie intermédiaire d'une colonne de direction de véhicule automobile, soit à la partie haute d'une colonne de direction de véhicule automobile.

Le dispositif d'accouplement de deux arbres suivant leur axe commun selon l'invention présente ainsi l'avantage d'avoir toujours deux zones d'appui pour chacun des deux arbres intérieur et extérieur et pour chaque rangée de billes, qui sont toujours en contact même lorsqu'il n'y a pas de transmission de couple de rotation.

De plus, il y a un effort axial réduit qui est nécessaire lors du montage en chaîne. L'ajustement précis du dispositif d'accouplement de l'invention permet d'éviter les à-coups axiaux lors de la conduite du véhicule, et garantit la bonne tenue à l'endurance en évitant l'apparition de jeu franc dans l'accouplement. De plus, lors du passage du couple de rotation, l'effort axial est réduit considérablement du fait du contact par roulement et par glissement. Enfin, le dispositif d'accouplement peut se monter facilement dans l'encombrement existant des colonnes de direction de véhicule automobile.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la figure 1 est une vue schématique en perspective d'une direction de véhicule automobile, dans laquelle le dispositif d'accouplement de l'invention s'applique à la partie intermédiaire de colonne ;
- la figure 2 est une vue axiale de la partie intermédiaire de la direction de véhicule automobile de la figure 1, dans laquelle est représenté en coupe axiale partielle un mode de réalisation de l'invention ;
- la figure 3 est une vue éclatée en perspective de l'ensemble du dispositif d'accouplement de la figure 2 ;
- la figure 4 est une coupe transversale suivant IV-IV de la figure 2 ;
- la figure 5 est une coupe transversale suivant le plan de la figure 4 d'un autre mode de réalisation de l'invention ;
- la figure 6 est une coupe transversale suivant le plan de la figure 4 d'un autre mode de réalisation de l'invention ;
- la figure 7 est une vue partielle agrandie de la figure 4 avec un chemin de roulement ;
- la figure 8 est une vue analogue à la figure 7 d'un autre mode de réalisation du chemin de roulement ;
- la figure 9 est une vue partielle agrandie du montage d'une rangée de billes de la figure 4 ;
- la figure 10 est une vue analogue à la figure 9 avec un autre chemin de roulement selon l'invention ; - la figure 11 est une vue analogue à la figure 9 avec un autre chemin de roulement selon l'invention ;
- la figure 12 est une vue analogue à la figure 9 avec un autre chemin de roulement selon l'invention ;
- la figure 13 est une vue analogue aux figures 9 à 12 avec un élément élastique en position libre ;
- la figure 14 est une vue analogue à la figure 13 avec l'élément élastique en position comprimée ;
- la figure 15 est une vue en perspective de l'arbre intérieur et du ressort correspondant à la figure 14.

L'invention se rapporte à un dispositif d'accouplement en rotation de deux arbres qui coulissent l'un dans l'autre suivant leur axe commun.

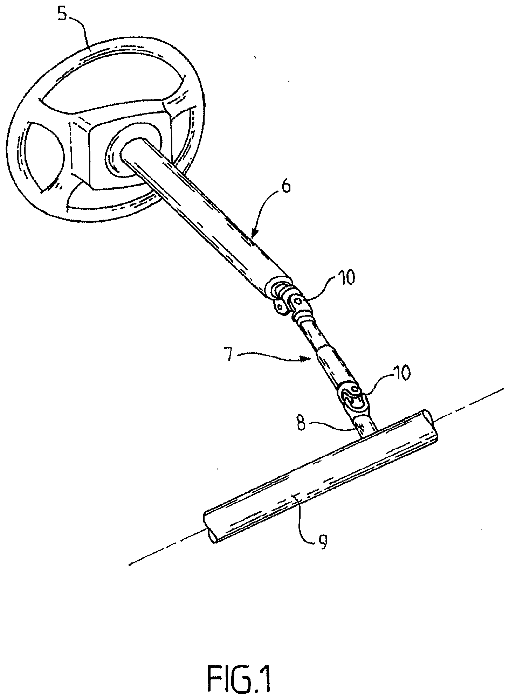

Ce dispositif d'accouplement s'applique particulièrement bien à une direction de véhicule automobile, comme celle qui est représentée schématiquement sur la figure 1.

La direction représentée comporte une colonne de direction avec une partie haute de colonne 6 appelée aussi haut de colonne, et une partie intermédiaire de colonne 7 appelée aussi axe intermédiaire.

La partie haute de colonne 6 est reliée par son extrémité supérieure au volant de direction 5, et par son extrémité inférieure à la partie intermédiaire de colonne 7.

La partie intermédiaire de colonne 7 est reliée par son extrémité supérieure à la partie haute de colonne 6, et par son extrémité inférieure au boîtier de direction 8 de la tige de direction 9.

La partie intermédiaire de colonne 7 est reliée à chacune de ses extrémités au moyen d'une articulation en joint de cardan référencée 10 pour la partie haute de colonne 6, et également référencée 10 pour le boîtier de direction 8.

Dans ce qui suit, la description se rapporte à un dispositif d'accouplement qui est aménagé dans la partie intermédiaire de colonne 7. Le dispositif d'accouplement de l'invention peut également être aménagé dans la partie haute de colonne 6.

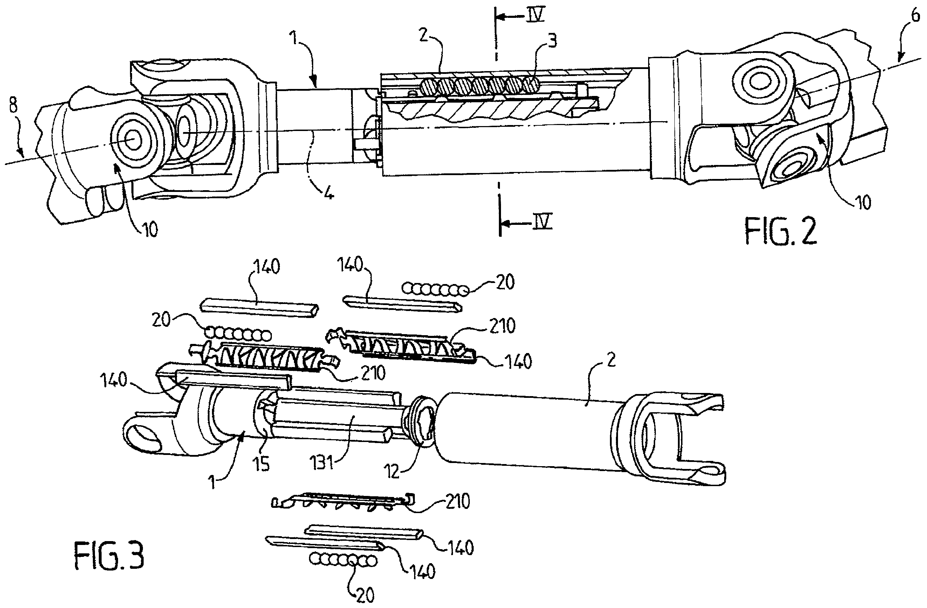

Un arbre intérieur 1 et un arbre extérieur 2 coulissent l'un dans l'autre suivant la direction de leur axe commun 4, qui est représenté sur les figures 2 et 3. Le dispositif d'accouplement des deux arbres comporte des billes 3 dans les différents modes de réalisation décrits ci-après. Les billes 3 sont disposées entre l'arbre intérieur 1 et l'arbre extérieur 2. Dans le dispositif d'accouplement de l'invention, chacune desdites billes 3 est disposée d'une part dans une partie concave de l'arbre intérieur 1, et d'autre part dans une partie concave de l'arbre extérieur 2.

Chacune desdites billes 3 se déplace sur deux chemins de roulement, qui coopèrent avec la partie concave de l'un des deux arbres et qui pivotent autour d'un axe d'articulation. Chaque chemin de roulement et l'axe d'articulation correspondant sont parallèles à l'axe commun 4. Chacun des deux chemins de roulement est poussé par un élément élastique, qui est disposé et qui prend appui dans ladite partie concave. Chacune desdites billes 3 se déplace directement contre la partie concave de l'autre arbre.

Le dispositif d'accouplement selon l'invention est agencé de manière qu'au repos, lorsqu'il n'y a pas de transmission de couple, et qu'en action, lorsqu'il y a transmission de couple, les billes 3 soient toujours en contact. De chaque côté d'un plan médian passant par le centre des billes 3 et par l'axe commun 4, chacune des billes 3 est toujours en contact par une zone d'appui avec le chemin de roulement correspondant disposé dans l'un des deux arbres, et par une zone d'appui avec la partie concave de l'autre arbre.

L'ensemble en vue axiale de la partie intermédiaire de colonne 7 est représenté sur la figure 2. L'arbre intérieur 1 et l'arbre extérieur 2 coulissent avec les billes 3 suivant leur axe commun 4. La partie intermédiaire de colonne 7 est reliée au boîtier de direction 8 par le joint de cardan 10, et elle est reliée à la partie haute de colonne 6 par le joint de cardan 10.

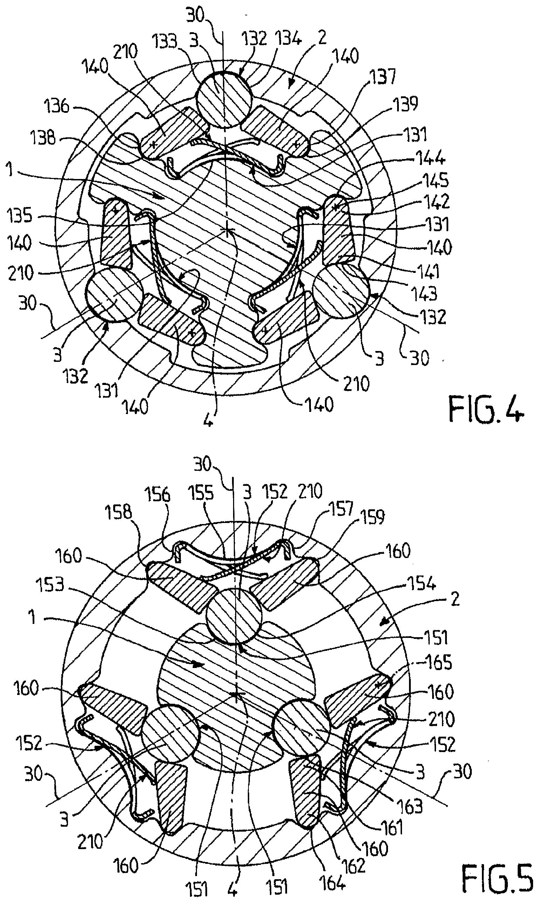

Le dispositif d'accouplement, représenté en vue éclatée sur la figure 3 et en coupe transversale sur la figure 4, comporte des billes 3 qui sont disposées en trois rangées axiales 20. Les rangées axiales 20 sont situées transversalement à 120° les unes des autres. L'arbre intérieur 1 est muni de trois rainures axiales 131, qui sont situées transversalement à 120° les unes des autres. L'arbre extérieur 2 est muni de trois rainures axiales 132, qui sont situées transversalement à 120° les unes des autres.

Pour chaque rangée 20 de billes 3, il est aménagé dans l'arbre extérieur 2 une partie concave en forme de rainure axiale 132, dont la section comporte deux faces concaves 133, 134 inclinées l'une par rapport à l'autre, qui viennent en contact avec les billes 3.

Pour chaque rangée 20 de billes 3, il est aménagé dans l'arbre intérieur 1 une partie concave en forme de rainure axiale 131 dont la section comporte un fond 135 et deux flancs 136, 137. Le fond 135 est sensiblement perpendiculaire au plan médian 30 passant par l'axe commun 4 et par l'axe des centres des billes 3 de ladite rangée 20.

Pour chaque rangée 20 de billes 3, il y a deux chemins de roulement 140 qui sont disposés de part et d'autre du plan médian 30. Les chemins de roulement 140 coopèrent avec la partie concave en forme de rainure axiale 131 de l'arbre intérieur 1.

Chaque chemin de roulement 140 est en forme de barre axiale, dont la section a une portion d'appui 141 et une portion pivot 142.

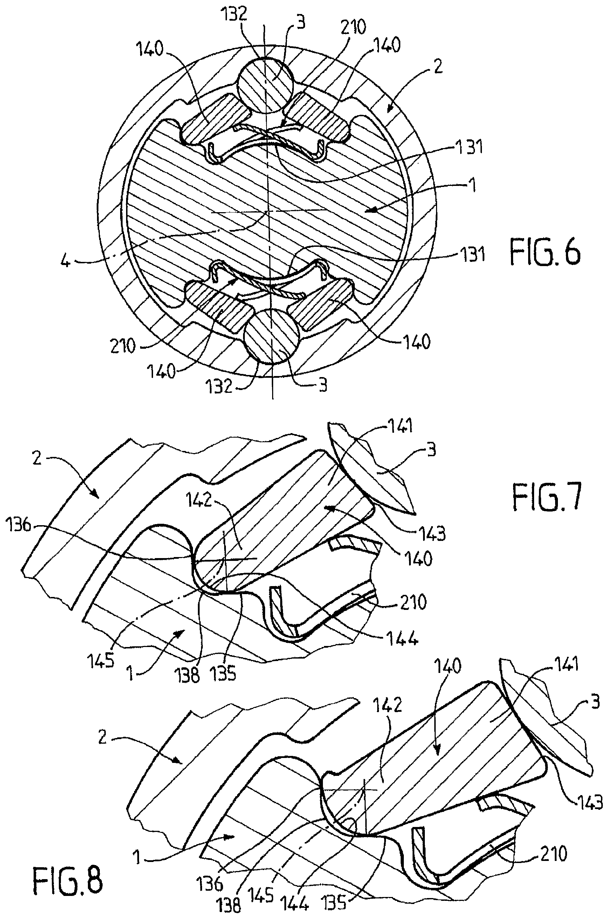

La portion d'appui 141 a une face d'appui 143, qui est déterminée pour venir en contact avec les billes 3. La portion pivot 142 de forme arrondie a une face pivot convexe 144, qui coopère avec une face support arrondie concave138 ou 139 de la rainure axiale 131. la face support arrondie concave 138 fait la jonction entre le fond 135 et le flanc 136 pour l'un des chemins de roulement 140, et la face arrondie concave 139 fait la jonction entre le fond 135 et le flanc 137 pour l'autre chemin de roulement 140.
Selon une caractéristique essentielle de l'invention représentée en détail sur les figures 7 et 8, le rayon de la face support arrondie concave 138 et le rayon de la face support arrondie concave 139 est plus petit que le rayon de la face pivot convexe 144 du chemin de roulement 140 correspondant. Cette caractéristique permet d'avoir deux zones de contact entre l'arbre 1 et le chemin de roulement 140 correspondant, dont l'action détermine la position d'un axe qui est l'axe d'articulation 145 du pivot parallèle à l'axe commun 4.

Chacun des deux chemins de roulement 140 est poussé par un élément élastique 210 qui prend appui sur le fond 135 de la rainure axiale 131.

Le dispositif d'accouplement représenté en coupe transversale selon la figure 5 comporte des billes 3 qui sont disposées en trois rangées axiales 20.

Les rangées axiales 20 sont situées transversalement à 120° les unes des autres. L'arbre intérieur 1 est muni de trois rainures axiales 151, qui sont situées transversalement à 120° les unes des autres. L'arbre extérieur 2 est muni de trois rainures axiales 152, qui sont situées transversalement à 120° les unes des autres.

Pour chaque rangée 20 de billes 3, il est aménagé dans l'arbre intérieur 1 une partie concave en forme de rainure axiale 151, dont la section comporte deux faces concaves 153, 154 inclinées l'une par rapport à l'autre, qui viennent en contact avec les billes 3.

Pour chaque rangée 20 de billes 3, il est aménagé dans l'arbre extérieur 2 une partie concave en forme de rainure axiale 152 dont la section comporte un fond 155 et deux flancs 156, 157. Le fond 155 est sensiblement perpendiculaire au plan médian 30 passant par l'axe commun 4 et par l'axe des centres des billes 3 de ladite rangée 20.

Pour chaque rangée 20 de billes 3, deux chemins de roulement 160 sont disposés de part et d'autre du plan médian 30. Les chemins de roulement 160 coopèrent avec la partie concave en forme de rainure axiale 152 de l'arbre extérieur 2. Chaque chemin de roulement 160 est en forme de barre axiale, dont la section a une portion d'appui 161 et une portion pivot 162.

La portion d'appui 161 a une face d'appui 163, qui est déterminée pour venir en contact avec les billes 3. La portion pivot 162 de forme arrondie a une face pivot convexe 164, qui coopère avec une face support arrondie concave 158 ou 159 de la rainure axiale 151. la face support arrondie concave 158 fait la jonction entre le fond 155 et le flanc 156 pour l'un des chemins de roulement 160, et la face arrondie concave 159 fait la jonction entre le fond 155 et le flanc 157 pour l'autre chemin de roulement 160.
Selon une caractéristique essentielle de l'invention représentée en détail sur les figures 7 et 8, le rayon de la face support arrondie concave 158 et le rayon de la face support arrondie concave 159 est plus petit que le rayon de la face pivot convexe 164 du chemin de roulement 160 correspondant. Cette caractéristique permet d'avoir deux zones de contact entre l'arbre 2 et le chemin de roulement 160 correspondant, dont l'action détermine la position d'un axe qui est l'axe d'articulation 165 du pivot parallèle à l'axe commun 4.

Chacun des deux chemins de roulement 160 est poussé par un élément élastique 210 qui prend appui sur le fond 155 de la rainure axiale 152.

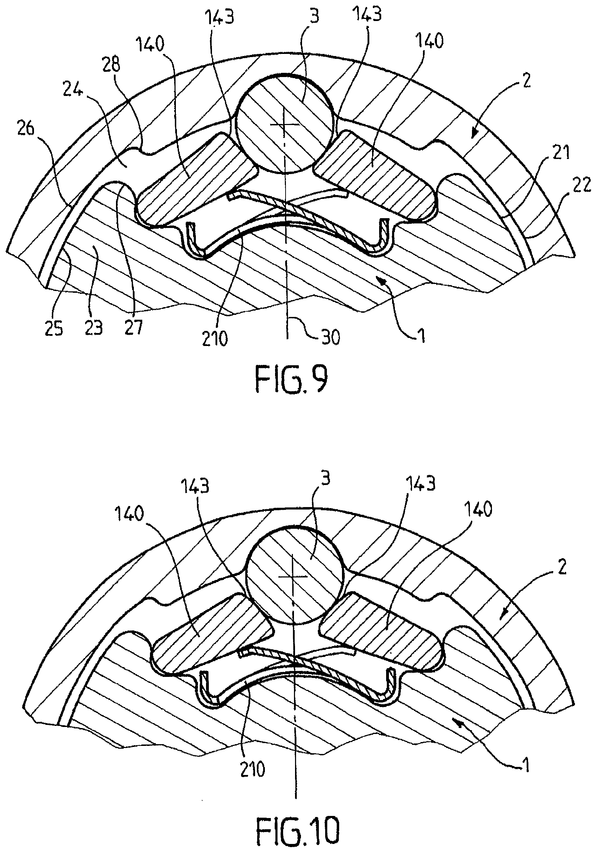

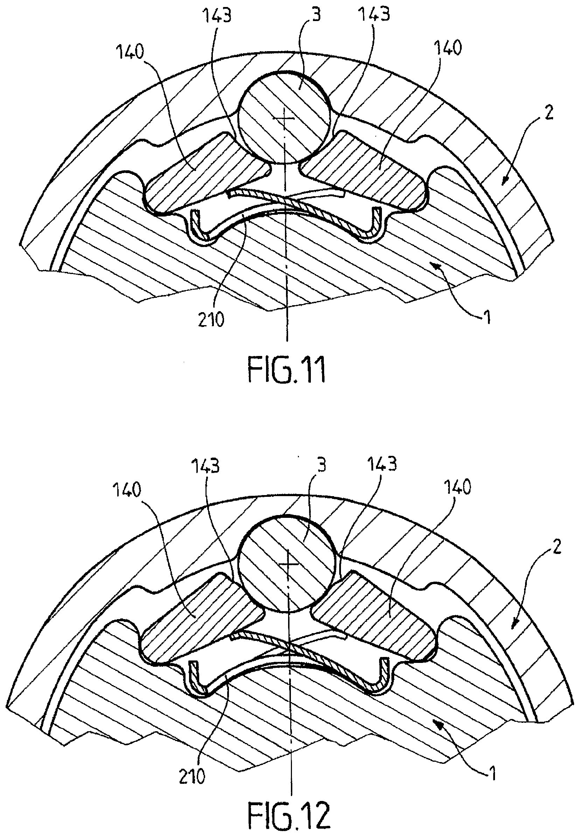

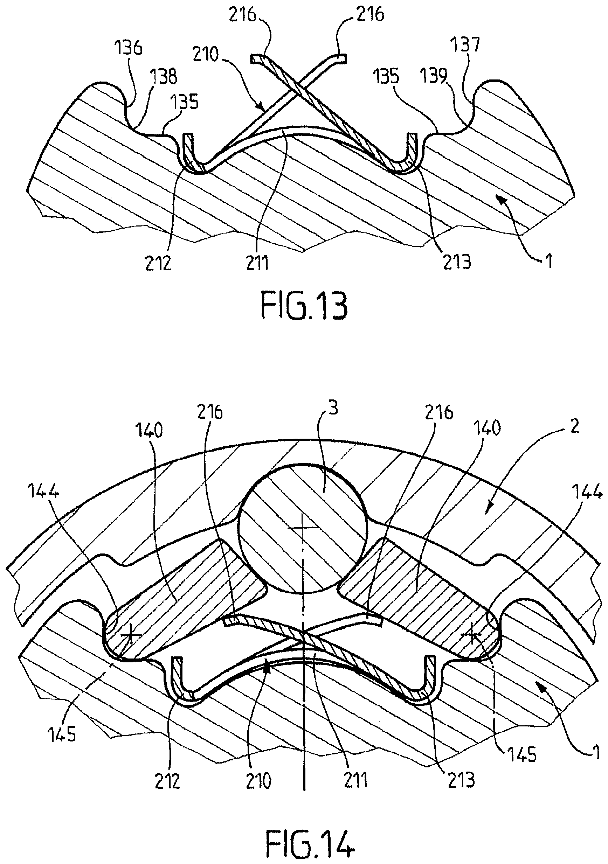

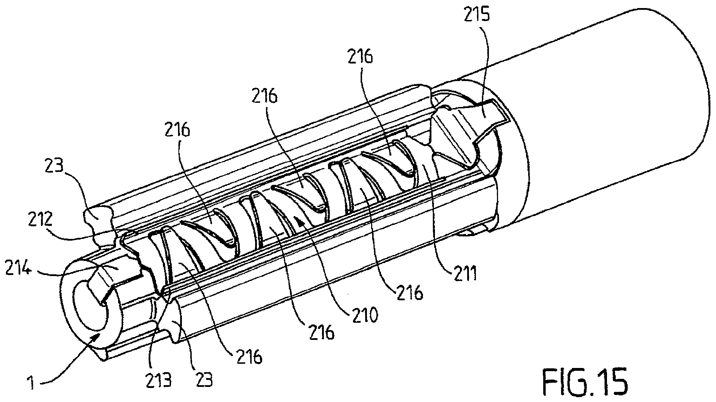

Quel que soit le mode de réalisation représenté sur les figures 2 à 15, chacun des deux chemins de roulement 140, 160 est poussé par un élément élastique qui est un ressort 210 métallique.
Le ressort 210 est constitué d'un corps axial 211 qui est muni d'éléments élastiques 216. Le corps 211 comporte de chaque côté transversal une bordure axiale 212 et 213, comme cela est représenté en détail sur les figures 13, 14, et 15. Le corps 211 comporte de plus à chaque extrémité axiale une agrafe 214 et 215. Les éléments élastiques sont des languettes transversales 216, qui sont agencées directement par découpe dans le corps 211. Les languettes transversales 216 sont accrochées alternativement sur une bordure axiale 212, puis sur l'autre bordure axiale 213. Le corps 211 se monte dans le fond 135, 155 de la partie concave correspondante de l'arbre concerné, en ayant une forme conjuguée avec le dit fond c'est-à-dire bombée autrement dit convexe. Ledit fond comporte, à chaque extrémité transversale, une forme concave recevant la bordure axiale 212, 213, correspondante dudit ressort 210, dont les deux agrafes 214, 215 s'accrochent sur l'arbre correspondant.
Dans les modes de réalisation représentés sur les figures le rayon de la face support de l'arbre 1 ou 2 et le rayon de la face pivot du chemin de roulement concerné ont une valeur constante. Dans d'autres modes de réalisation représentés sur la figure 8, le rayon de la face pivot est évolutif. Dans d'autres modes de réalisation de l'invention non représentés, c'est le rayon de la face support de l'arbre 1 ou 2, qui est évolutif. Enfin dans d'autres modes de réalisation de l'invention non représentés, c'est le rayon de la face pivot et de la face support qui sont évolutifs. Comme cela est représenté notamment sur les figures 6, 7, 8, et 9, chacun des deux chemins de roulement 140, 160 a la portion d'appui 141, 161 munie d'une face d'appui 143, 163 des billes 3 qui est plane. Comme cela est représenté sur la figure 10, la face d'appui des billes est convexe, tandis que selon la figure 11 la face d'appui est concave, et selon la figure 12 la face d'appui des billes a une double concavité

Comme cela est représenté sur les figures 3 à 5, les billes 3 peuvent être disposées en trois rangées axiales 20, les rangées axiales 20 étant transversalement à 120° les unes des autres. L'arbre intérieur 1 est muni de trois rainures axiales 131, 151, 171, 191, les rainures axiales 131, 151 étant transversalement à 120° les unes des autres. L'arbre extérieur 2 est muni de trois rainures axiales 132, 152, les rainures axiales 132, 152 étant transversalement à 120° les unes des autres.

Comme c'est le cas de la figure 6, les billes 3 peuvent être disposées en deux rangées axiales 20 diamétralement opposées. L'arbre intérieur 1 est muni de deux rainures axiales 131, 151 diamétralement opposées ; et l'arbre extérieur 2 est muni de deux rainures axiales 132, 152 diamétralement opposées.

Comme cela est représenté notamment sur la figure 9, des rainures mâles 23 et des rainures femelles 24 ayant des profils conjugués avec un certain jeu, sont aménagées sur la face de coulissement 21 de l'arbre intérieur 1 et sur la face de coulissement 22 de l'arbre extérieur 2 ; les rainures mâles ayant un sommet 25 et deux flancs 27, les rainures femelles 24 ayant un fond 26 et deux flancs 28. Ainsi en cas de perte des billes 3, le couple peut être encore transmis entre l'arbre intérieur 1 et l'arbre extérieur 2.

Comme c'est le cas notamment des figures 4, 6,et 16, les éléments élastiques ou ressorts 210, peuvent être disposés dans l'arbre intérieur 1 et pousser les deux chemins de roulement 140, 180, qui coopèrent avec l'arbre intérieur.

Comme pour notamment la figure 5 les éléments élastiques ou ressorts 210 peuvent être disposés dans l'arbre extérieur 2 et pousser les deux chemins de roulement 160 qui coopèrent avec l'arbre extérieur.

Tout en restant dans le cadre de l'invention, les éléments élastiques ou ressorts 210 peuvent aussi être disposés pour certains dans l'arbre intérieur 1, et pour les autres dans l'arbre extérieur 2, lesdits éléments élastiques poussant les deux chemins de roulement correspondants, qui coopèrent avec l'arbre considéré.

Dans le mode de réalisation des figures 3 et 4, l'arbre intérieur 1 est muni de trois rainures axiales 131. Les rainures axiales 131 sont transversalement à 120° les unes des autres. Dans chaque rainure axiale 131 sont montés un élément élastique axial ou ressort 210 et deux chemins de roulement 140 en forme de barre axiale.

Les billes 3 sont disposées en trois rangées axiales 20, qui sont transversalement à 120° les unes des autres.

L'ensemble des billes 3 avec les chemins de roulement 140 et les éléments élastiques ou ressorts 210 est fermé à chaque extrémité axiale par un épaulement 15 et par une bague de maintien 12. La bague de maintien 12 vient s'engager dans chacune des rainures axiales 131 de l'arbre intérieur 1.

L'arbre extérieur 2 est muni de trois rainures axiales 132 transversalement à 120° les unes des autres, qui viennent coulisser sur les rangées 20 de billes 3. Les rainures axiales 132 doivent avoir la longueur voulue pour permettre le coulissement axial demandé de l'arbre extérieur 2 et de l'arbre intérieur 1.

Les caractéristiques essentielles de l'invention sont rappelées ci-après.

Les billes sont en contact d'une part avec l'un des arbres et d'autre part avec les deux chemins de roulement. Les chemins de roulement sont en contact avec l'autre arbre, et ils peuvent pivoter dans l'arbre. Les chemins de roulement sont en contact avec des éléments élastiques qui ont pour objet de maintenir les contacts entre les chemins de roulement et les billes en un point.

Lors de l'assemblage du système, les éléments élastiques permettent de compenser les variations dimensionnelles des différents composants. On peut parler d'absorption des tolérances par déformation des éléments élastiques.

Lors de l'application d'un couple, la charge est transmise du tube sur l'arbre au travers des billes et des chemins de roulement. La ligne d'application de la charge passe par le centre de la bille et le pivot du chemin de roulement. Ainsi la charge est reprise directement par l'arbre sans sollicitation sur l'élément élastique. La rigidité angulaire est très importante et indépendante de la raideur des éléments élastiques.

Lors du mouvement axial du tube par rapport à l'arbre, l'effort de coulissement du système est fonction des contraintes sur les billes introduites par les éléments élastiques.

Lors de l'application d'un couple, l'effort de coulissement du système est alors fonction des contraintes sur les billes introduites par les éléments élastiques et le couple appliqué sur le système.

## Revendications

1. Dispositif d'accouplement d'un arbre intérieur (1) et d'un arbre extérieur (2) coulissant l'un dans l'autre suivant la direction de leur axe commun (4), avec des billes (3) disposées entre les deux arbres, chacune des dites billes (3) étant disposées d'une part dans une partie concave de l'arbre intérieur (1), et d'autre part dans une partie concave de l'arbre extérieur (2), chacune desdites billes (3) se déplaçant sur deux chemins de roulement (140, 160) qui coopèrent avec la partie concave de l'un des deux arbres, chaque bille (3) se déplaçant directement contre la partie concave de l'autre arbre ; lesdits chemins de roulement pivotant dans la partie concave correspondante, et étant poussés par un élément élastique (210) prenant appui dans ladite partie concave,
les deux chemins de roulement (140, 160) étant disposés de part et d'autre d'un plan médian (30) passant par l'axe commun 4 et par le centre desdites billes (3),
chacun des deux chemins de roulement (140, 160) étant en forme de barre axiale dont la section a:
- une portion d'appui (141, 161, 181, 201), avec une face d'appui (143, 163) de chacune desdites billes (3) ;
- et une portion pivot (142, 162), avec une face pivot arrondie convexe (144, 164) s'appliquant contre une face support arrondie concave (138-139, 158-159) de la partie concave correspondante de l'arbre (1, 2),
**caractérisé en ce que** l'axe d'articulation (145, 165) du pivot est situé entre la face pivot (144) et la face d'appui (143, 163), plus proche de la face pivot (144) que de la face d'appui (143, 163) et le rayon de la face support de l'arbre (1, 2) est différent du rayon de la face pivot (144) du chemin de roulement (140, 160) afin d'avoir deux zones de contact qui déterminent la position d'un axe d'articulation (145, 165) du pivot parallèle à l'axe commun (4) de manière :
- qu'au repos, lorsqu'il n'y a pas de transmission de couple, et qu'en action lorsqu'il y a transmission de couple,
- chacune desdites billes est toujours en contact de chaque côté du plan médian, par une zone d'appui avec le chemin de roulement correspondant disposé dans l'un des deux arbres, et par une zone d'appui avec la partie concave de l'autre arbre.

2. Dispositif d'accouplement selon la revendication 1, **caractérisé en ce que** :
- le rayon de la face support concave (138-139, 158-159) de l'arbre (1, 2) est plus petit que le rayon de la face pivot (144, 164) convexe du chemin de roulement (140, 160).

3. Dispositif d'accouplement selon la revendication 1, **caractérisé en ce que** pour chacun des deux chemins de roulement(140, 160), le rayon de la face support de l'arbre (1, 2) et le rayon de la face pivot du chemin de roulement sont constants.

4. Dispositif d'accouplement selon la revendication 1 **caractérisé en ce que** pour chacun des deux chemins de roulement (140, 160), le rayon de la face pivot est évolutif.

5. Dispositif d'accouplement selon la revendication 1 **caractérisé en ce que** pour chacun des deux chemins de roulement (140, 160) le rayon de la face support et le rayon de la face pivot sont évolutifs.

6. Dispositif d'accouplement selon la revendication 1, **caractérisé en ce que** pour chacun des deux chemins de roulement(140, 160), la portion d'appui (141, 161) a une face d'appui (143, 163) des billes qui est plane.

7. Dispositif d'accouplement selon la revendication 1, **caractérisé en ce que** pour chacun des deux chemins de roulement (140, 160), la portion d'appui (141, 161) a une face d'appui (143, 163) des billes qui est convexe.

8. Dispositif d'accouplement selon la revendication 1, **caractérisé en ce que** pour chacun des deux chemins de roulement (140, 160), la portion d'appui (141, 161) a une face d'appui (143, 163) des billes qui est concave.

9. Dispositif d'accouplement selon la revendication 1, **caractérisé en ce que** pour chacun des deux chemins de roulement (140, 160), la portion d'appui (141, 161) a une face d'appui (143, 163) des billes qui a une double concavité.

10. Dispositif d'accouplement selon la revendication 1, **caractérisé en ce que** l'élément élastique est un ressort (210), constitué d'un corps (211) muni d'éléments élastiques (216), et comportant une bordure axiale (212, 213) de chaque côté et une agrafe (214, 215) à chaque extrémité axiale : ledit corps (211) se montant dans un fond (135, 155) de la partie concave correspondante de l'arbre en ayant une forme conjuguée avec ledit fond c'est-à-dire bombée ou convexe, ledit fond ayant à chaque extrémité transversale une forme concave recevant la bordure axiale (212, 213) correspondante dudit ressort (210), dont les deux agrafes (214, 215) s'accrochent sur l'arbre correspondant.

11. Dispositif d'accouplement selon la revendication 10, **caractérisé en ce que** les éléments élastiques sont des languettes transversales (216) agencées directement par découpe dans le corps (211), lesdites languettes étant accrochées alternativement sur une bordure axiale puis sur l'autre bordure.

12. Dispositif d'accouplement selon l'une quelconque des revendications précédentes, **caractérisé en ce que** des rainures mâles (23) et femelles (24) avec des profils conjugués ayant un certain jeu, sont aménagées sur l'arbre intérieur (1) et l'arbre extérieur (2), de façon qu'en cas de rupture des billes (3), le couple puisse être encore transmis entre l'arbre intérieur (1) et l'arbre extérieur (2).

13. Dispositif d'accouplement selon l'une quelconque des revendications précédentes **caractérisé en ce que** chacun des éléments élastiques (210) est disposé dans l'arbre intérieur (1) et pousse les deux chemins de roulement (140) correspondants qui coopèrent avec l'arbre intérieur (1).

14. Dispositif d'accouplement selon l'une quelconque des revendications 1 à 12, **caractérisé en ce que** chacun des éléments élastiques (210) est disposé dans l'arbre extérieur (2), et pousse les deux chemins de roulement correspondants (160), qui coopèrent avec l'arbre extérieur (2).

15. Dispositif d'accouplement selon l'une quelconque des revendications 1 à 12, caractérisé en ce chacun des éléments élastiques (210) est disposé pour certains dans l'arbre intérieur (1), et pour d'autres dans l'arbre extérieur (2) chacun des dits éléments élastiques poussant les deux chemins de roulement correspondants, qui coopèrent avec l'arbre considéré.

16. Dispositif d'accouplement selon les revendications 2 et 3 à 11, **caractérisé en ce que** les billes (3) sont disposées en deux rangées axiales (20) :
- pour chaque rangée (20) de billes (3), il est aménagé dans l'arbre extérieur (1) une partie concave en forme de rainure axiale (132), dont la section comporte deux faces concaves (133, 134) inclinées l'une par rapport à l'autre, qui viennent en contact avec les billes (3).
- pour chaque rangée (20) de billes (3), il est aménagé dans l'arbre intérieur (1) une partie concave en forme de rainure axiale (131) dont la section comporte un fond (135) et deux flancs (136, 137), le fond (135) étant sensiblement perpendiculaire au plan médian (30) passant par l'axe commun et par l'axe des centres des billes (3) de ladite rangée (20);
- pour chaque rangée (20) de billes (3), deux chemins de roulement (140) sont disposés de part et d'autre du plan médian (30) et coopèrent avec la partie concave en forme de rainure axiale (131) de l'arbre intérieur (1), et chaque chemin de roulement (140) est en forme de barre axiale dont la section a :
- une portion d'appui (141) avec une face d'appui (143) déterminée pour venir en contact avec les billes (3)
- une portion pivot (142) de forme arrondie avec une face pivot convexe (144), qui coopère avec une face support arrondie concave (138, 139), faisant la jonction entre le fond (135) et le flanc (136, 137) correspondant de la rainure axiale (131), afin d'avoir deux zones de contact déterminant la position de l'axe d'articulation (145) du pivot parallèle à l'axe commun (4);
- chacun des deux chemins de roulement (140) est poussé par un ressort (210) qui prend appui sur le fond (135) de la rainure axiale (131).

17. Dispositif d'accouplement selon les revendications 2 et 3 à 11, **caractérisé en ce que** les billes (3) sont disposées en plusieurs rangées axiales (20) :
- pour chaque rangée (20) de billes (3), il est aménagé dans l'arbre intérieur (1) une partie concave en forme de rainure axiale (151), dont la section comporte deux faces concaves (153, 154) inclinées l'une par rapport à l'autre, qui viennent en contact avec les billes 3
- pour chaque rangée (20) de billes (3), il est aménagé dans l'arbre extérieur (2) une partie concave en forme de rainure axiale (152) dont la section comporte un fond (155) et deux flancs (156, 157), le fond (155) étant sensiblement perpendiculaire au plan médian (30) passant par l'axe commun (4) et par l'axe des centres des billes (3) de ladite rangée (20);
- pour chaque rangée (20) de billes (3), deux chemins de roulement (160) sont disposés de part et d'autre du plan médian (30) et coopèrent avec la partie concave en forme de rainure axiale (152) de l'arbre extérieur, chaque chemin de roulement (160) est en forme de barre axiale, dont la section a :
- une portion d'appui (161) avec une face d'appui (163) déterminée pour venir en contact avec les billes (3) :
- une portion pivot (162) de forme arrondie avec une face pivot convexe (164), qui coopère avec une face support arrondie concave (158, 159) faisant la jonction entre le fond (155) et le flanc correspondant (156, 157) de la rainure axiale (152), afin d'avoir deux zones de contact déterminant la position de l'axe d'articulation (165) du pivot parallèle à l'axe commun (4) :
- chacun des deux chemins de roulement (160) est poussé par un ressort (210) qui prend appui sur le fond (155) de la rainure axiale (152).

18. Dispositif d'accouplement selon l'une quelconque des revendications 16 à 17, **caractérisé en ce que** les billes (3) sont disposées en trois rangées axiales (20), les rangées axiales (20) étant transversalement à 120° les unes des autres :
- l'arbre intérieur (1) est muni de trois rainures axiales (131, 151), les rainures axiales (131, 151 171 , 191) étant transversalement à 120° les unes des autres ;
- l'arbre extérieur (2) est muni de trois rainures axiales (132, 152), les rainures axiales (132, 152) étant transversalement à 120° les unes des autres ;

19. Dispositif d'accouplement selon l'une quelconque des revendications 16 à 17, **caractérisé en ce que** :
- les billes (3) sont disposées en deux rangées axiales (20), diamétralement opposées :
- l'arbre intérieur (1) est muni de deux rainures axiales (131, 151), diamétralement opposées ;
- l'arbre extérieur (2) est muni de deux rainures axiales (132, 152, 172, 192), diamétralement opposées ;

20. Dispositif d'accouplement selon l'une quelconque des revendications précédentes **caractérisé en ce que** :
- l'arbre intérieur (1) est muni de trois rainures axiales (131) les rainures axiales (131) étant transversalement à 120° les unes des autres, dans chaque rainure axiale (131) sont montés un ressort métallique (210) axial et deux chemins de roulement (140) en forme de barre axiale;
- les billes (3) sont disposées en trois rangées axiales (20), les rangées axiales (20) étant transversalement à 120° les unes des autres
- l'ensemble des billes (3) avec les chemins de roulement (140) et les ressorts métalliques (210) est fermé à chaque extrémité par un épaulement (15) et par une bague de maintien (12) qui vient s'engager dans chacune des rainures axiales (131, 171) de l'arbre intérieur (1) ;
- l'arbre extérieur (2) est muni de trois rainures axiales (132) transversalement à 120° les unes des autres, qui viennent coulisser sur les rangées (20) de billes (3), les rainures axiales (132) ayant la longueur voulue pour permettre le coulissement axial demandé de l'arbre extérieur (2) et de l'arbre intérieur (1).

21. Dispositif d'accouplement selon l'une quelconque des revendications précédentes **caractérisé en ce qu'**il s'applique à la partie intermédiaire (7) d'une colonne de direction de véhicule automobile.

22. Dispositif d'accouplement selon l'une quelconque des revendications 1 à 20 **caractérisé en ce qu'**il s'applique à la partie haute (6) d'une colonne de direction de véhicule automobile.

## Patentansprüche

1. Kupplungsvorrichtung für eine innere Welle (1) und eine äußere Welle (2), wobei die eine in der anderen in Richtung ihrer gemeinsamen Achse (4) entlang gleitet, mit Kugeln (3), die zwischen den beiden Wellen angeordnet sind, wobei jede Kugel (3) zum einen in einem konkaven Teil der inneren Welle (1) und zum anderen in einem konkaven Teil der äußeren Welle (2) angeordnet ist, und sich jede Kugel (3) auf zwei Rollbahnen (140, 160) bewegt, die mit dem konkaven Teil einer der beiden Wellen zusammenwirken, wobei sich jede Kugel (3) direkt gegen den konkaven Teil der anderen Welle bewegt, die Rollbahnen in den entsprechenden konkaven Teil schwenken und gegen ein elastisches Element (210) gedrückt werden, das auf besagtem konkaven Teil aufliegt,
wobei die beiden Rollbahnen (140, 160) zu beiden Seiten einer, durch die gemeinsame Achse 4 und die Mitte der Kugeln (3) verlaufende Mittelebene (30) angeordnet sind,
wobei jede der beiden Rollbahnen (140, 160) die Form einer axialen Stange aufweist, deren Querschnitt:
- einen Anlageabschnitt (141, 161, 181, 201) mit einer Auflagefläche (143, 163) für jede der Kugeln (3) aufweist,
- und einen Zapfenabschnitt (142, 162) mit einer abgerundeten konvexen Zapfenfläche (144, 164), die an einer abgerundeten konkaven Trägerfläche (138-139, 158-159) des entsprechenden konkaven Teils der Welle (1, 2) anliegt,
**dadurch gekennzeichnet, dass** sich die Gelenkachse (145, 165) des Zapfens zwischen der Zapfenfläche (144) und der Auflagefläche (143, 163) näher zur Zapfenfläche (144) als zur Auflagefläche (143, 163) befindet und der Radius der Trägerfläche der Welle (1, 2) vom Radius der Zapfenfläche (144) der Rollbahn (140, 160) abweicht, um zwei Kontaktbereiche zu haben, welche die parallele Position einer Gelenkachse (145, 165) des Zapfens in Bezug auf die gemeinsame Achse (4) bestimmen, dergestalt, dass:
- in Ruhestellung, wenn kein Drehmoment übertragen wird, und in aktivierter Stellung, wenn ein Drehmoment übertragen wird,
- jede der Kugeln immer an jeder Seite der Mittelebene über einen Anlagebereich mit der entsprechenden Rollbahn, die in einer der beiden Wellen angeordnet ist, und über einen Anlagebereich mit dem konkaven Teil der anderen Welle in Kontakt ist.

2. Kupplungsvorrichtung nach Anspruch 1, **dadurch gekennzeichnet, dass**:
- der Radius der konkaven Trägerfläche (138-139, 158-159) der Welle (1, 2) kleiner ist als der Radius der konvexen Zapfenfläche (144, 164) der Rollbahn (140, 160).

3. Kupplungsvorrichtung nach Anspruch 1, **dadurch gekennzeichnet, dass** der Radius der Trägerfläche der Welle (1, 2) und der Radius der Zapfenfläche der Rollbahn bei jeder der beiden Rollbahnen konstant sind.

4. Kupplungsvorrichtung nach Anspruch 1, **dadurch gekennzeichnet, dass** der Radius der Zapfenfläche bei jeder der beiden Rollbahnen (140, 160) veränderlich ist.

5. Kupplungsvorrichtung nach Anspruch 1, **dadurch gekennzeichnet, dass** der Radius der Trägerfläche und der Radius der Zapfenfläche bei jeder der beiden Rollbahnen (140, 160) veränderlich sind.

6. Kupplungsvorrichtung nach Anspruch 1, **dadurch gekennzeichnet, dass** der Anlageabschnitt (141, 161) bei jeder der beiden Rollbahnen (140, 160) eine ebene Auflagefläche (143, 163) für die Kugeln aufweist.

7. Kupplungsvorrichtung nach Anspruch 1, **dadurch gekennzeichnet, dass** der Anlageabschnitt (141, 161) dass bei jeder der beiden Rollbahnen (140, 160) eine konvexe Auflagefläche (143, 163) für die Kugeln aufweist.

8. Kupplungsvorrichtung nach Anspruch 1, **dadurch gekennzeichnet, dass** der Anlageabschnitt (141, 161) dass bei jeder der beiden Rollbahnen (140, 160) eine konkave Auflagefläche (143, 163) für die Kugeln aufweist.

9. Kupplungsvorrichtung nach Anspruch 1, **dadurch gekennzeichnet, dass** der Anlageabschnitt (141, 161) bei jeder der beiden Rollbahnen (140, 160) eine doppelt gekrümmte Auflagefläche (143, 163) für die Kugeln aufweist.

10. Kupplungsvorrichtung nach Anspruch 1, **dadurch gekennzeichnet, dass** das elastische Element eine Feder (210) bestehend aus einem Körper (211) mit elastischen Elementen (216) ist, und sie an jeder Seite einen axialen Rand (212, 213) und an jedem axialen Ende eine Klammer (214, 215) aufweist, besagter Körper (211) in den Grund (135, 155) des entsprechenden konkaven Teils der Welle montiert wird, da er eine Form hat, die sich an besagten Grund anpasst, d.h. die gewölbt oder konvex ist, wobei besagter Grund an jedem Querende eine konkave Form aufweist, in welcher der entsprechende axiale Rand (212, 213) besagter Feder (210), deren zwei Klammern (214, 215) sich auf der entsprechenden Welle ineinander verhaken, aufgenommen wird.

11. Kupplungsvorrichtung nach Anspruch 10, **dadurch gekennzeichnet, dass** die elastischen Elemente quer verlaufende, direkt aus dem Körper (211) gestanzte Zungen (216) sind, wobei die Zungen abwechselnd auf dem axialen und der anderen Rand befestigt werden.

12. Kupplungsvorrichtung nach einem der vorhergehenden Ansprüche, **dadurch gekennzeichnet, dass** auf der inneren Welle (1) und der äußeren Welle (2) Einsteck- (23) und Aufnahmenuten (24) mit einander ergänzenden Profilen und einem Spiel angeordnet sind, so dass bei einem Bruch der Kugeln (3) das Drehmoment zwischen der inneren Welle (1) und der äußeren Welle (2) immer noch übertragen werden kann.

13. Kupplungsvorrichtung nach einem der vorhergehenden Ansprüche, **dadurch gekennzeichnet, dass** jedes der elastischen Elemente (210) in der inneren Welle (1) angeordnet ist und gegen die beiden, mit der inneren Welle zusammen wirkenden Rollbahnen (140) drückt.

14. Kupplungsvorrichtung nach einem der Ansprüche 1 bis 12, **dadurch gekennzeichnet, dass** jedes der elastischen Elemente (210) in der äußeren Welle (2) angeordnet ist und gegen die beiden, mit der äußeren Welle (2) zusammenwirkenden Rollbahnen (160) drückt.

15. Kupplungsvorrichtung nach einem der Ansprüche 1 bis 12, **dadurch gekennzeichnet, dass** jedes der elastischen Elemente (210) entweder in der inneren Welle (1) oder in der äußeren Welle (2) angeordnet ist, wobei jedes der besagten elastischen Elemente gegen die beiden mit der jeweiligen Welle zusammenwirkenden Rollbahnen drückt.

16. Kupplungsvorrichtung nach den Ansprüchen 2 und 3 bis 11, **dadurch gekennzeichnet, dass** die Kugeln (3) in zwei axialen Reihen (20) angeordnet sind:
- wobei bei jeder Reihe (20) Kugeln (3) in der äußeren Welle (1) ein konkaver Teil in Form einer axialen Nut (132) eingearbeitet ist, deren Querschnitt zwei konkave, zueinander geneigte Seiten (133, 124) aufweist, die mit den Kugeln (3) in Berührung kommen.
- wobei bei jeder Reihe (20) Kugeln (3) in der inneren Welle (1) ein konkaver Teil in Form einer axialen Nut (131) eingearbeitet ist, deren Querschnitt einen Grund (135) und zwei Seiten (136, 137) aufweist, wobei der Grund (135) im Wesentlichen senkrecht zur Mittelebene (30) steht, die durch die gemeinsame Achse und die Mittelachse der Kugeln (3) besagter Reihe (20) führt.
- wobei bei jeder Reihe (20) Kugeln (3) zwei Rollbahnen (140) zu beiden Seiten der Mittelebene (30) angeordnet sind und mit dem konkaven Teil der inneren Welle (1) in Form einer axialen Nut (131) zusammenwirken und jede Rollbahn (140) die Form einer axialen Stange aufweist, deren Querschnitt:
- einen Anlageabschnitt (141) mit einer Auflagefläche (143) aufweist, die bestimmt ist, um mit den Kugeln (3) in Berührung zu kommen,
- einen Zapfenabschnitt (142) in abgerundeter Form mit einer konvexen Zapfenfläche (144), die mit einer abgerundeten konkaven Trägerfläche (138, 139) zusammenwirkt, die die Verbindung zwischen dem Grund (135) und der entsprechenden Seite (136, 137) der axialen Nut (131) herstellt, um zwei Kontaktbereiche zu bilden, welche die parallele Position der Gelenkachse (145) des Zapfens in Bezug auf die gemeinsame Achse (4) bestimmen;
- jede der beiden Rollbahnen (140) wird von einer Feder (210) gedrückt, die auf dem Grund (135) der axialen Nut (131) aufliegt.

17. Kupplungsvorrichtung nach den Ansprüchen 2 und 3 bis 11, **dadurch gekennzeichnet, dass** die Kugeln (3) in mehreren axialen Reihen (20) angeordnet sind:
- Bei jeder Reihe (20) Kugeln (3) wird in der inneren Welle (1) ein konkaver Teil in Form einer axialen Nut (151) eingearbeitet, deren Querschnitt zwei konkave, zueinander geneigte Seiten (153, 154) umfasst, die mit den Kugeln 3 in Berührung kommen,
- Bei jeder Reihe (20) Kugeln (3) wird in der äußeren Welle (2) ein konkaver Teil in Form einer axialen Nut (152) eingearbeitet, deren Querschnitt einen Grund (155) und zwei Seiten (156, 157) umfasst, wobei der Grund im Wesentlichen senkrecht zur Mittelebene (30) steht, die durch die gemeinsame Achse (4) und die Mittelachse der Kugel (3) besagter Reihe (20) verläuft;
- Bei jeder Reihe (20) Kugeln (3) sind zwei Rollbahnen (160) zu beiden Seiten der Mittelebene (30) angeordnet und wirken mit dem konkaven Teil der äußeren Welle in Form einer axialen Nut (152) zusammen, wobei jede Rollbahn (160) die Form einer axialen Stange hat, deren Querschnitt
- einen Anlageabschnitt (161) mit einer bestimmten Auflagefläche (163) aufweist, um mit den Kugeln (3) in Berührung zu kommen,
- einen Zapfenabschnitt (162) in abgerundeter Form mit einer konvexen Zapfenfläche (164), die mit einer abgerundeten konkaven Trägerfläche (158, 159) zusammenwirkt, die die Verbindung zwischen dem Grund (155) und der entsprechenden Seite (156, 157) der axialen Nut (152) herstellt, um zwei Kontaktbereiche zu bilden, welche die parallele Position der Gelenkachse (165) des Zapfens in Bezug auf die gemeinsame Achse (4) bestimmen;
- jede der beiden Rollbahnen (160) wird von einer Feder (210) gedrückt, die auf dem Grund (155) der axialen Nut (152) aufliegt.

18. Kupplungsvorrichtung nach einem der Ansprüche 16 bis 17, **dadurch gekennzeichnet, dass** die Kugeln (3) in drei axialen Reihen (20) angeordnet sind, wobei die axialen Reihen (20) in einem Winkel von 120° quer zu einander stehen:
- die innere Welle (1) mit drei axialen Nuten (131, 151) versehen ist, wobei die axialen Nuten (131, 151 171, 191) in einem Winkel von 120° quer zu einander stehen;
- die äußere Welle (2) mit drei axialen Nuten (132, 152) versehen ist, wobei die axialen Nuten (132, 152) in einem Winkel von 120° quer zu einander stehen.

19. Kupplungsvorrichtung nach einem der Ansprüche 16 bis 17, **dadurch gekennzeichnet, dass**
- die Kugeln (3) in zwei axialen, einander diametral gegenüberliegenden Reihen (20) angeordnet sind:
- die innere Welle (1) mit zwei axialen, einander diametral gegenüberliegenden Nuten (131, 151) versehen ist;
- die äußere Welle (2) mit zwei axialen, einander diametral gegenüberstehenden Nuten (132, 152, 172, 192) versehen ist.

20. Kupplungsvorrichtung nach einem der vorhergehenden Ansprüche, **dadurch gekennzeichnet, dass**:
- die innere Welle (1) mit drei axialen Nuten (131) versehen ist, wobei die axialen Nuten (131) in einem Winkel von 120° quer zueinander stehen, und in jede axiale Nut (131) eine Metallfeder (210) und zwei Rollbahnen (140) in Form einer axialen Stange montiert sind;
- die Kugeln (3) in drei axialen Reihen (20) angeordnet sind, wobei die axialen Reihen (20) in einem Winkel von 120° quer zueinander stehen,
- der Satz bestehend aus den Kugeln (3) mit den Rollbahnen (140) und den Metallfedern (210) an jedem Ende durch eine Schulter (15) und einen Haltering (12), der in jede der axialen Nuten der inneren Welle (131, 171) einrastet, geschlossen wird.
- die äußere Welle (2) mit drei axialen Nuten (132) versehen ist, die in einem Winkel von 120° quer zueinander stehen und auf den Reihen (20) Kugeln (3) entlang gleiten, wobei die axialen Nuten (132) eine Länge haben, die das von der äußeren Welle (2) und der inneren Welle (1) verlangte axiale Gleiten ermöglichen.

21. Kupplungsvorrichtung nach einem der vorhergehenden Ansprüche, **dadurch gekennzeichnet, dass** sie auf dem Zwischenteil (7) einer Lenksäule eines Fahrzeugs zur Anwendung kommt.

22. Kupplungsvorrichtung nach einem der Ansprüche 1 bis 20, **dadurch gekennzeichnet, dass** sie am oberen Teil (6) einer Lenksäule zur Anwendung kommt.

## Claims

1. A device for coupling an inner shaft (1) and an outer shaft (2) sliding one in the other in the direction of their common axis (4), with balls (3) disposed between the two shafts, each of said balls (3) being disposed firstly in a concave part of the inner shaft (1) and secondly in a concave part of the outer shaft (2), each of said balls (3) moving on two running tracks (140, 160) that cooperate with the concave part of one of the two shafts, each ball (3) moving directly against the concave part of the other shaft; said running tracks pivoting in the corresponding concave part, and being pushed by an elastic element (210) bearing in said concave part,
the two running tracks (140, 160) being disposed on either side of a midplane (30) passing through the common axis (4) and through the centre of said balls (3),
each of the two running tracks (140, 160) being in the form of axial bar, the cross section of which has:
- a bearing portion (141, 161, 181, 201), with a bearing face (143, 163) of each of said balls (3);
- and a pivot portion (142, 162), with a convex rounded pivot face (144, 164) applied against a concave rounded support face (138-139, 158-159) of the corresponding concave part of the shaft (1, 2),
**characterised in that** the articulation axis (145, 165) of the pivot is situated between the pivot face (144) and the bearing face (143, 163), closer to the pivot face (144) than to the bearing face (143, 163), and the radius of the support face of the shaft (1, 2) is different from the radius of the pivot face (144) of the running track (140, 160) in order to have two contact zones that determine the position of an articulation axis (145, 165) of the pivot parallel to the common axis (4) so that:
- at rest, when there is no transmission of torque, and in action when there is transmission of torque,
- each of sad balls is always in contact on each side of the midplane, through a bearing zone with the corresponding running track disposed in one of the two shafts, and through a bearing zone with the concave part of the other shaft.

2. A coupling device according to claim 1, **characterised in that**:
- the radius of the concave support face (138-139, 158-159) of the shaft (1, 2) is smaller than the radius of the convex pivot face (144, 164) of the running track (140, 160).

3. A coupling device according to claim 1, **characterised in that**, for each of the two running tracks (140, 160), the radius of the support face of the shaft (1, 2) and the radius of the pivot face of the running track are constant.

4. A coupling device according to claim 1, **characterised in that**, for each of the two running tracks (140, 160), the radius of the pivot face changes.

5. A coupling device according to claim 1, **characterised in that**, for each of the two running tracks (140, 160), the radius of the support face and the radius of the pivot face change.

6. A coupling device according to claim 1, **characterised in that**, for each of the two running tracks (140, 160), the bearing portion (141, 161) has a bearing face (143, 163) for the balls that is planar.

7. A coupling device according to claim 1, **characterised in that**, for each of the two running tracks (140, 160), the bearing portion (141, 161) has a bearing face (143, 163) for the balls, which is convex.

8. A coupling device according to claim 1, **characterised in that**, for each of the two running tracks (140, 160), the bearing portion (141, 161) has a bearing face (143, 163) for the balls, which is concave.

9. A coupling device according to claim 1, **characterised in that**, for each of the two running tracks (140, 160), the bearing portion (141, 161) has a bearing face (143, 163) for the balls that has a double concavity.

10. A coupling device according to claim 1, **characterised in that** the elastic element is a spring (210), consisting of a body (211) provided with elastic elements (216), and comprising an axial rim (212, 213) on each side and a claw (214, 215) at each axial end: said body (211) being assembled in a bottom (135, 155) of the corresponding concave part of the shaft while having a shape conjugate with said bottom, that is to say domed or convex, said bottom having, at each transverse end, a concave shape receiving the corresponding axial rim (212, 213) of said spring (210), the two claws (214, 215) of which hook onto the corresponding shaft.

11. A coupling device according to claim 10, **characterised in that** the elastic elements are transverse tongues (216) arranged directly by cutting from the body (211), said tongues being attached alternately to one axial rim and then to the other rim.

12. A coupling device according to any of the preceding claims, **characterised in that** male (23) and female (24) grooves with conjugate profiles having a certain clearance are provided on the inner shaft (1) and the outer shaft (2) so that, in the event of breakage of the balls (3), the torque can still be transmitted between the inner shaft (1) and the outer shaft (2).

13. A coupling device according to any of the preceding claims, **characterised in that** each of the elastic elements (210) is disposed in the inner shaft (1) and pushes the two corresponding running tracks (140) that cooperate with the inner shaft (1).

14. A coupling device according to any of claims 1 to 12, **characterised in that** each of the elastic elements (210) is disposed in the outer shaft (2) and pushes the two corresponding running tracks (160), which cooperate with the outer shaft (2).

15. A coupling device according to any of claims 1 to 12, **characterised in that** each of the elastic elements (210) is disposed in some cases in the inner shaft (1) and in other cases in the outer shaft (2), each of said elastic elements pushing the two corresponding running tracks, which correspond with the shaft in question.

16. A coupling device according to claims 2 and 3 to 11, **characterised in that** the balls (3) are disposed in two axial rows (20):
- for each row (20) of balls (3), there is provided in the outer shaft (1) a concave part in the form of an axial groove (132), the cross section of which comprises two concave faces (133, 134) inclined with respect to one another, which come into contact with the balls (3);
- for each row (20) of balls (3), there is provided in the inner shaft (1) a concave part in the form of an axial groove (131) the cross section of which comprises a bottom (135) and two sides (136, 137), the bottom (135) being substantially perpendicular to the midplane (30) passing through the common axis and through the axis of the centres of the balls (3) in said row (20);
- for each row (20) of balls (3), two running tracks (140) are disposed on either side of the midplane (30) and cooperate with the concave part in the form of an axial groove (131) of the inner shaft (1), and each running track (140) is in the form of an axial bar, the cross section of which has:
- a bearing portion (141) with a bearing face (143) designed so as to come into contact with the balls (3);
- a pivot portion (142) with a rounded shape with a convex pivot face (144), which cooperates with a concave rounded support face (138, 139), forming the junction between the bottom (135) and the corresponding side (136, 137) of the axial groove (131), in order to have two contact zones determining the position of the articulation axis (145) of the pivot parallel to the common axis (4);
- each of the two running tracks (140) is pushed by a spring (210) that bears on the bottom (135) of the axial groove (131).

17. A coupling device according to any of claims 2 and 3 to 11, **characterised in that** the balls (3) are disposed in a plurality of axial rows (20):
- for each row (20) of balls (3), there is provided in the inner shaft (1) a concave part in the form of an axial groove (151), the cross section of which comprises two concave faces (153, 154) inclined with respect to each other, which come into contact with the balls (3);
- for each row (20) of balls (3), there is provided in the outer shaft (2) a concave part in the form of an axial groove (152), the cross section of which comprises a bottom (155) and two sides (156, 157), the bottom (155) being substantially perpendicular to the midplane (30) passing through the common axis (4) and through the axis of the centres of the balls (3) in said row (20);
- for each row (20) of balls (3), two running tracks (160) are disposed on either side of the midplane (30) and cooperate with the concave part in the form of an axial groove (152) of the outer shaft, and each running track (160) is in the form of an axial bar, the cross section of which has:
- a bearing portion (161) with a bearing face (163) designed so as to come into contact with the balls (3);
- a pivot portion (162) with a rounded shape with a convex pivot face (164), which cooperates with a concave rounded support face (158, 159), forming the junction between the bottom (155) and the corresponding side (156, 157) of the axial groove (152), in order to have two contact zones determining the position of the articulation axis (165) of the pivot parallel to the common axis (4);
- each of the two running tracks (160) is pushed by a spring (210) that bears on the bottom (155) of the axial groove (152).

18. A coupling device according to either claim 16 or claim 17, **characterised in that** the balls (3) are disposed in three axial rows (20), the axial rows (20) being transversely at 120° from one another:
- the inner shaft (1) is provided with three axial grooves (131, 151), the axial grooves (131, 151, 171, 191) being transversely at 120° from one another;
- the outer shaft (2) is provided with three axial grooves (132, 152), the axial grooves (132, 152) being transversely at 120° from one another.

19. A coupling device according to either claim 16 or claim 17, **characterised in that**:
- the balls (3) are disposed in two diametrically opposed axial rows (20);
- the inner shaft (1) is provided with two diametrically opposed axial grooves (131, 151);
- the outer shaft (2) is provided with two diametrically opposed axial grooves (132, 152, 172, 192).

20. A coupling device according to any of the preceding claims, **characterised in that**:
- the inner shaft (1) is provided with three axial grooves (131), the axial grooves (131) being transversely at 120o from one another, in each axial groove (131) there are mounted an axial metal spring (210) and two running tracks (140) in the form of an axial bar;
- the balls (3) are disposed in three axial rows (20), the axial rows (20) being transversely at 120° from one another;
- the set of balls (3) with the running tracks (140) and the metal springs (210) is closed at each end by a shoulder (15) and by a holding ring (12) that is engaged in each of the axial grooves (131, 171) of the inner shaft (1);
- the outer shaft (2) is provided with three axial grooves (132) transversely at 120° from one another, which slide on the rows (20) of balls (3), the axial grooves (132) having the required length for allowing the required axial sliding of the outer shaft (2) and the inner shaft (1).

21. A coupling device according to any of the preceding claims, **characterised in that** it is applied to the intermediate part (7) of a motor vehicle steering column.

22. A coupling device according to any of claims 1 to 20, **characterised in that** it is applied to the top part (6) of a motor vehicle steering column.
